# EUROPÄISCHE PATENTSCHRIFT

(11) **EP 3 985 221 B1**
(45) Veröffentlichungstag und Bekanntmachung des Hinweises auf die Patenterteilung: **11.01.2023**
(21) Anmeldenummer: 20202342.0
(22) Anmeldetag: 16.10.2020
(51) Int. Cl.: E06B 9/68

(54) **LEISTUNGSVERSORGUNGSSCHALTUNG**
POWER SUPPLY CIRCUIT
CIRCUIT D'ALIMENTATION ÉLECTRIQUE

(43) Veröffentlichungstag der Anmeldung: 20.04.2022
(73) Patentinhaber: COMATEC CONSULTING S.R.L., 06132 San Andrea delle Fratte (IT)
(72) Erfinder: Lely, Giancarlo, 06132 Perugia (IT)
(74) Vertreter: Manitz Finsterwald Patent- und Rechtsanwaltspartnerschaft mbB

(56) Entgegenhaltungen:
- EP-A1- 2 784 923
- EP-A1- 3 255 770
- EP-B1- 3 255 770
- FR-A1- 2 861 513
- FR-A1- 2 874 465
- FR-A1- 3 004 034
- FR-B1- 2 874 465
- US-A- 5 856 916

## Beschreibung

Die Erfindung betrifft eine Leistungsversorgungsschaltung. Insbesondere betrifft sie die Leistungsversorgung für Gleichstrommotoren, deren Drehsinn abhängig von der Polarität der anliegenden Gleichspannung unterschiedlich ist. Regelmäßig wird die hier benötigte Gleichspannung durch Gleichrichtung aus Netzwechselspannung erzeugt. Die Netzwechselspannung kann beispielsweise effektiv 100 V oder 110 V oder 220 V oder 230 V sein. Ihre Frequenz kann 50 Hz oder 60 Hz sein. Die benötigte Gleichspannung kann beispielsweise 48 V sein oder 24 V oder 12 V oder andere Werte, vorzugsweise unter 50 V. Ein Einsatzgebiet ist der Antrieb von Jalousien, die elektromotorisch geöffnet, also aufgerollt, bzw. geschlossen, also abgerollt, werden. Das Öffnen geschieht mit dem einen Drehsinn des treibenden Elektromotors und mit der einen Polarität der anliegenden Gleichspannung, das Schließen mit dem anderen Drehsinn des Elektromotors und dementsprechend mit der anderen Polarität der anliegenden Gleichspannung. Der Elektromotor kann in einen Kettenantrieb oder sonstiges Getriebe eingebunden sein.

Beispielsweise für den genannten Antrieb von Jalousien, aber auch in vielen anderen Anwendungsfällen, ist es wünschenswert, Elektromotoren mit Spannungen deutlich unter der Netzwechselspannung zu betreiben, da dann Sicherheitsbestimmungen weniger streng sind und die Motoren, ihre Versorgungsleitungen und die Einbauumgebung einfacher ausgelegt sein können als wenn Netzwechselspannung verwendet wird und geführt werden muss. Wenn außerdem statt Wechselspannung Gleichspannung verwendet wird, kann der Drehsinn des Antriebs mittels der Einstellung der Spannungspolarität der Gleichspannung und damit direkt über die Versorgungsleitungen beeinflusst werden und bedarf keiner weiteren Signalisierung und Verkabelung hierfür zum Motor hin.

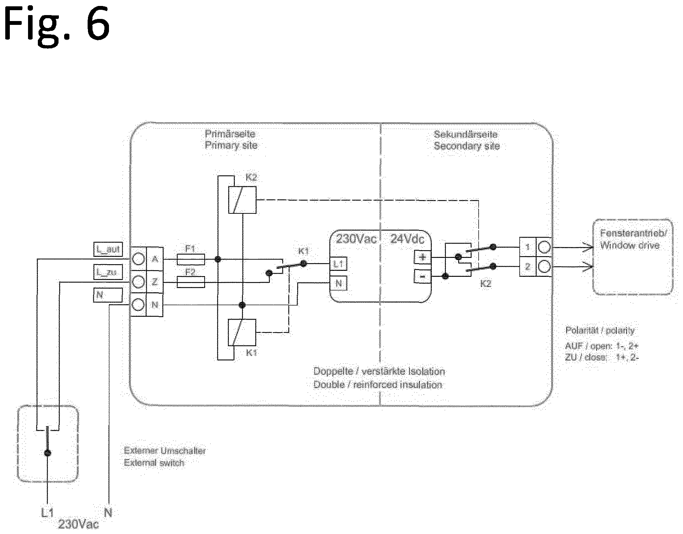

Fig. 6 zeigt eine bekannte Schaltung für eine Versorgung eines Jalousienantriebs. Links unten sind die Netzwechselspannungsanschlüsse N, der Neutral- oder Nullleiter, und L1, eine der Phasen eines Drehstromsystems, gezeigt. Die Phase L1 kann über einen mittels eines Schalters wählbaren Weges L_auf oder L_zu einem Anschluss einer Primärseite eines Netzteils geführt werden. Der andere Eingangsanschluss der Primärseite ist an den Nullleiter N angeschlossen. Nach Maßgabe des Umstands, ob der Primärseite die Leistung über L_auf oder L_zu zugeführt wird, wird primärseitig ein Relais K2 bedient, das eine sekundärseitig erzeugte Gleichspannung von beispielsweise 24 V zwischen den zwei möglichen Polaritäten an den Ausgängen umschaltet. Außerdem ist ein weiteres Relais K1 vorgesehen, um primärseitig den Phasenanschluss des Eingangsanschlusses der Primärspule zwischen den zwei Leitungen L_auf und L_zu umzuschalten. Das Netzteil insgesamt ist so dimensioniert ist, dass auf der Sekundärseite eine Gleichspannung geeigneter Amplitude entsteht. Diese steht zunächst in einer Polarität zur Verfügung. Der relaisbetätigbare Umschalter kann diese dann in den zwei möglichen Polaritäten an die Ausgangsklemmen der Spannungsversorgung durchreichen.

Nachteil dieses Aufbaus ist, dass er voluminös und thermisch kritisch ist. Zum einen werden Relais benötigt, die den vergleichsweise hohen Sicherheitsstandards für Netzwechselspannung genügen müssen, so dass schon die Relais vergleichsweise groß sind. Wenn zum anderen die Transformation bei Netzfrequenz, also 50 Hz oder 60 Hz, erfolgt, müssen bei dieser vergleichsweise niedrigen Frequenz zur Erreichung eines akzeptablen Wirkungsgrads der Transformator mit seinem Eisenkern groß und damit voluminös und schwer gebaut werden. Wegen der bei Netzfrequenz relativ hohen Verlustleistung im Transformator ist dort die Wärmeentwicklung in der Spule beachtlich. Die Verwendung eines Schaltnetzteils führt ohne zu höherfrequenten elektromagnetischen Abstrahlungen, die durch Gegenmaßnahmen unterdrückt werden müssen. Die bekannten Schaltungen sind deshalb weder unter thermischen Gesichtspunkten noch im Hinblick auf ihre Baugröße für die Montage in der Wand, also beispielsweise in Unterputzdosen, geeignet. Vielmehr müssen sie in einer Aufputzdose oder abseits der Wandinstallation in Schaltkästen montiert werden, was erhöhten Verkabelungsaufwand zur Folge hat.

Die FR 2874465 A1 beschreibt eine Stromversorgungsschaltung mit einem Gleichrichter mit drei parallelen Diodenbrücken. Die EP 2784923 A1 beschreibt einen elektrischen Antrieb mit Drosseln im Wechselstromkreis. Die EP 3255770 A1 beschreibt einen Drehstromversorgung mit Drosseln in jeder Phase.

Aufgabe der Erfindung ist es, eine Leistungsversorgungsschaltung anzugeben, die aus Wechselspannung Gleichspannung wählbarer Polarität erzeugen kann und die vergleichsweise bauklein und thermisch unkritisch ist.

Diese Aufgabe wird mit den Merkmalen des Anspruchs 1 gelöst.

Bevorzugte Ausführungsformen werden durch die abhängigen Ansprüche beschrieben.

Eine Leistungsversorgungsschaltung hat ein von einem Wechselspannungseingang her mit elektrischer Wechselleistung versorgtes Schaltnetzteil, dem die elektrische Wechselleistung in einem der beiden Stromkreisleitungen vom Benutzer mittels eines Schalters wählbar über einen erstem Eingangsanschluss oder über einen zweiten Eingangsanschluss über eine oder die andere von zwei alternativ wählbaren Zuleitungen zugeführt wird. Über einen dritten Eingangsanschluss kann der Eingangsstromkreis geschlossen werden. Abhängig davon, welche der beiden auswählbaren Zuleitungen für die Leistungszufuhr auf der Primärseite verwendet wird, wird auf der Sekundärseite die Polarität der vom Schaltnetzteil erzeugten Gleichspannung eingestellt.

Das Schaltnetzteil weist auf der Primärseite einen Vollwellengleichrichter mit parallelen Diodenbrücken auf. Die beiden alternativ auswählbaren Zuleitungen werden dabei an eine jeweils eigene Diodenbrücke angeschaltet, insbesondere an deren jeweiligen Mittenanschluss, so dass insgesamt drei parallele Diodenbrücken (Zweiweg-Gleichrichter) vorhanden sind, die mit ihren entsprechenden Endanschlüssen parallelgeschaltet sind. Mindestens eine der wählbaren Zuleitungen weist einen ersten Signalabgriff auf. Nach Maßgabe des so abgreifbaren Signals wird ein Polaritätssignal erzeugt, das zur Sekundärseite durchgereicht und dort zur Einstellung der Polarität der ausgegebenen Gleichspannung verwendet wird.

Dadurch, dass die zwei wählbaren Zuleitungen über getrennte Diodenbrücken in die primärseitige Brückengleichrichtung eingespeist werden, kann wenigstens eine der beiden oder können beide für Signalabgriffe verwendet werden, da sich das Signal auf der einen wählbaren Leitung nicht der anderen wählbaren Leitung mitteilt. Auf diese Weise kann das Polaritätssignal abhängig davon erzeugt werden, über welche der beiden alternativ wählbaren Zuleitungen die Netzwechselleistung zugeführt wird. Im Leistungsstrang der Gesamtschaltung macht die Wahl der Anschaltung der Leistung keinen Unterschied. Die Wahl dient der Signalisierung, um eine der beiden Polaritäten und mittelbar dadurch beispielsweise eine der beiden Laufrichtungen eines Elektromotors wählen zu können, ohne über die Schaltung der Wechselleistung weitere Schalter zu benötigen.

Durch Verwendung eines Schaltnetzteils kann die Transformation von Netzspannung auf niedrigere Spannung bei deutlich höheren Frequenzen als Netzfrequenz erfolgen. Es kann deshalb der Transformator kleiner gebaut werden, und er hat geringere Verlustleistung. Es sind deshalb Baugrößen erreichbar, die in zwei standardisierten Unterputzdosen oder fallabhängig sogar in einer Unterputzdose montierbar sind.

Um Rückwirkungen des primärseitigen Schaltens im Schaltnetzteil auf die Versorgungsleitungen und letztlich auf die Hausinstallation zu vermeiden, ist eine stromkompensierte Drossel vorgesehen, die für jede der drei Leitungen vor dem Vollwellengleichrichter eine eigene Spule bzw. Induktivität aufweist. Die drei Spulen können in der Weise gekoppelt sein, dass die zwei Spulen in den zwei wählbaren Leitungen gemeinsam in eine Spulenkammer gewickelt sind. Die Spule in der fest angeschlossene Leitung ist vorzugsweise axial benachbart anschließend separat gewickelt. Die Drossel kann einen Kern aufweisen, um den herum die Spulen gewickelt sind. Die drei Spulen haben vorzugsweise in etwa gleiche Induktivitäten. Sie sind so verschaltet und elektromagnetisch miteinander verkoppelt, dass sich die beim Schalten des Schaltnetzteils jeweils entstehenden hochfrequenten Signalanteile mit Frequenzen über der Netzfrequenz in den beiden Leitungen in etwa aufheben. Auf diese Weise werden Rückwirkungen der Schaltaktivitäten des Schaltnetzteils in die Versorgungsleitungen weitgehend vermieden.

Es kann zwischen erstem Eingangsanschluss und dritten Eingangsanschluss ein erster Kondensator vorgesehen sein. Zwischen zweitem Eingangsanschluss und drittem Eingangsanschluss kann ein zweiter Kondensator vorgesehen sein. Zusammen mit den Induktivitäten können die Kondensatoren nach Maßgabe der Schaltfrequenz des Schaltnetzteils dimensioniert sein, so dass eine weitere wirksame Unterdrückung der Ausbreitung von Schaltrauschen gegeben ist.

Der Umpoler auf der Sekundärseite ist dem sekundärseitigen Gleichrichter nachgeschaltet und weist Halbleiterschalter auf, die so verschaltet sind, dass sie wenigstens die beiden möglichen Polaritäten an den zwei Ausgangsklemmen einstellen können, also wahlweise +/- oder -/+. Sie können auch auf "offen" entsprechend "vollständig aus" einstellbar sein. Vorzugsweise sind wenigstens vier Halbleiterschalter vorgesehen, von denen je einer je einen Anschluss vom sekundärseitigen Gleichrichter an je einen Ausgangsanschluss anlegen oder von ihm trennen kann und die gemeinsam geeignet angesteuert werden.

Primärseite und Sekundärseite sind vorzugsweise galvanisch voneinander getrennt. Im Leistungsstrang erfolgt dies durch den Transformator im Schaltnetzteil. Im Signalstrang kann dies durch Drahtloskoppler, insbesondere Optokoppler erfolgen. Insbesondere wird das Polaritätssignal über wenigstens einen Optokoppler vom ersten Signalabgriff her dem Umpoler zugeführt. Die Halbleiterschalter des Umpolers können nach Maßgabe des Polaritätssignals umschaltbar sein, insbesondere zwischen An = niederohmig und Aus = hochohmig.

Im Vorwärts-Signalzweig von der Primärseite zur Sekundärseite kann die Signalisierung des Polaritätssignals nacheinander über zwei Drahtloskoppler laufen. Ein erster Drahtloskoppler, insbesondere Optokoppler, kann gleich nahe am ersten Signalabgriff sitzen und kann von dort ein in seiner Amplitude geeignet eingestelltes Signal abgreifen und drahtlos weitergeben. Das so erzeugte Signal kann digital verwertbar sein und kann ein Flipflop betätigen, dessen Ausgang das Polaritätssignal liefert, das dann über den schon erwähnten weiteren Optokoppler dem Umpoler zugeführt wird. Wenn an je einer der zwei wählbaren Zuleitungen ein Signalabgriff vorgesehen ist, können diese getrennt über jeweils eigene Optokoppler geführt werden und dann jeweils den Setzeingang bzw. den Rücksetzeingang des erwähnten Flipflops betätigen.

Der erste Optokoppler im Signalfluss vor dem Flipflop trennt die Hochspannungsseite am Eingang von der Signalseite. Der zweite Optokoppler nach dem Flipflop trennt die Primärseite von der Sekundärseite.

Es kann ein Rückführungszweig (Rückkopplungszweig) von der Sekundärseite zur Primärseite vorgesehen sein, beispielsweise um die Ausgangsgleichspannung durch Eingriff auf der Primärseite zu regeln und/oder für Anschlags- und Ausschaltdetektion. Am Ausgang des sekundärseitigen Gleichrichters kann ein Gleichsignalabgriff ansetzen, der ein analoges Signal zur Primärseite zurückreicht (rückkoppelt). Das analoge Signal kann über einen Drahtloskoppler, insbesondere Optokoppler, geführt werden. Primärseitig kann das rückgeführte (rückgekoppelte) Signal zur Regelung des Schaltnetzteils verwendet werden, etwa zur Regelung der Pulsbreite des Zerhackers des Schaltnetzteils. Es kann sich um Pulsbreitenmodulation handeln. Es kann die Regeldifferenz zu einem vorgebbaren oder fest eingestellten Sollwert erzeugt werden und diese dann in einen geeignet verfassten Regler eingegeben werden, der dann nach Maßgabe einer geeignet implementierten Kennlinie Schaltimpulse geeigneter Breite für den Zerhacker erzeugt. Die Impulsfrequenz dieser Impulse kann fest sein. Die Pulsbreite kann einstellbar sein. Statt einer Regelung mit Rückführung kann aber auch eine einfachere Vorwärtssteuerung ohne Gleichspannungsrückführung für Spannungsregelung vorgesehen sein.

Die Leistungsversorgungsschaltung kann in einem Gehäuse verbaut sein, das für den Einbau in eine standardisierte Unterputzdose oder in eine Doppel-Unterputzdosen geformt und ausgelegt ist. Die Unterputzdosen können solche sein, die entsprechend einem Standard beispielsweise als Doppeldosen (Geräte-Verbindungsdosen) z. B. mit einem NennDurchmesser von 55 mm oder einer Norm gebaut sind. Das Gehäuse kann geeignete Formgebung und Taillierungen aufweisen, um den Verbau der benötigten Komponenten zu ermöglichen. Der eingangsseitige Schalter für die Wahl "auf" oder "zu" bzw. technisch ausgedrückt für die Wahl der Polarität der auszugebenden Gleichspannung kann außen (über Putz) auf das Gehäuse aufsetzbar und gegebenenfalls daran befestigbar sein oder kann in eigenen Über- oder Unterputzdosen verbaut und über Leitungen angeschlossen werden.

Nachfolgend werden Bezug nehmend auf die Zeichnungen Ausführungsformen der Erfindung beschrieben. Es zeigen:
- Fig. 1: ein Blockschaltbild der Leistungserzeugungsschaltung,
- Fig. 2: ein erweitertes Blockschaltbild der Eingangsseite der Leistungser-zeugungsschaltung,
- Fig. 3A bis 3C: Darstellungen betreffend eine Drossel,
- Fig. 4A: ein Schaltbild der Primärseite der Leistungserzeugungsschaltung,
- Fig. 4B: ein Schaltbild der Sekundärseite der Leistungserzeugungsschal-tung,
- Fig. 5: Merkmale des Gehäuses, und
- Fig. 6: Stand der Technik.

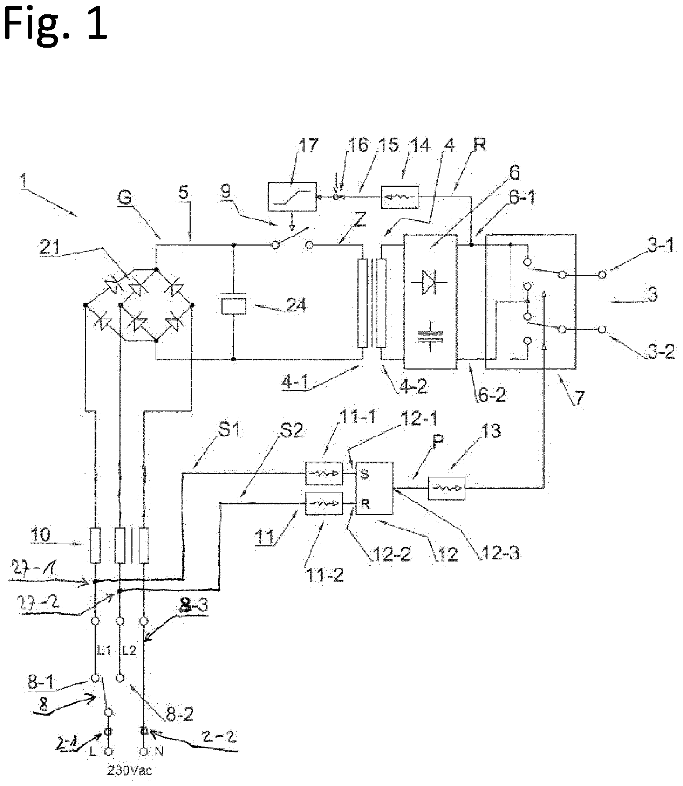

Fig. 1 zeigt ein Blockschaltbild der Leistungserzeugungsschaltung. Sie umfasst ein mit Wechselleistung versorgtes Schaltnetzteil, dem die elektrische Wechselleistung in einer der beiden Stromkreisleitungen wählbar über eine oder die andere von zwei alternativ wählbaren Zuleitungen zugeführt wird. Abhängig davon, welche der Leitungen für die Leistungszufuhr auf der Primärseite verwendet wird, wird auf der Sekundärseite die Polarität der erzeugten Gleichspannung eingestellt.

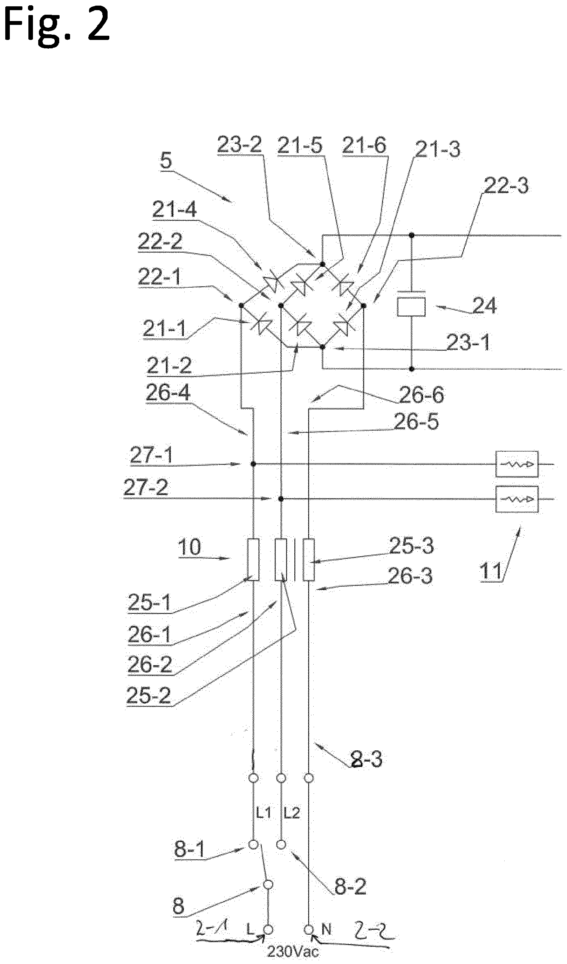

Fig. 1 ist ein Blockschaltbild der gesamten Schaltung. Fig. 2 ist ein genaueres Blockschaltbild der Eingangsseite der Schaltung. Mit 2 ist eine Wechselspannungsquelle bezeichnet, als die beispielsweise der Gebäudeanschluss einer üblichen Gebäudeversorgung angesehen werden kann, also Wechselspannung von 230 V oder 110 V bei 50 Hz oder 60 Hz. Es sind aber auch andere Wechselspannungsgrößen möglich. Die Spannungsquelle kann eine Phase L1 oder L2 oder L3 eines Drehstromanschlusses gegenüber dem Neutralleiter N sein. Die Spannungsquelle 2 kann eine in der Hausinstallation gesteuerte Spannungsquelle sein, etwa gemäß dem KNX-Standard oder dem EIB-Standard.

Die Quelle kann zwei Versorgungsanschlüsse 2-1 und 2-2 aufweisen. Es können dies beispielsweise in eine Unterputzdose laufende Leitungen des Nullleiters N, vorzugsweise am Anschluss 2-2, und einer Phase L (z. B. L1 des Drehstromsystems L1-L2-L3-N), vorzugsweise am Anschluss 2-1, sein. Aber auch die umgekehrte Zuordnung ist möglich: N an 2-1, L an 2.2. Die Leistungsversorgungsschaltung weist drei Eingangsanschlüsse 8-1, 8-2 und 8-3 auf. Über einen Schalter 8 kann im Betrieb der erste Versorgungsanschluss 2-1 wahlweise an den ersten oder zweiten Eingangsanschluss 8-1 oder 8-2 angeschaltet werden. Es kann sich hierbei um eine während des Betriebs feste Anschaltung handeln. Der dritte Eingangsanschluss 8-3 kann fest an den zweiten Versorgungsanschluss 2-2 angeschlossen sein. Der Schalter 8 kann auch eine dritte offene Schaltposition aufweisen, in der der Versorgungsanschluss 2-1 an keinen Eingangsanschluss angeschaltet ist, also keine Leistung zugeführt wird.

Der Schalter 8 kann mechanisch gebaut sein und kann ein handelsüblicher Umschalter der nötigen Nennspannung (z. B. 230 V), ggf. auch mit einer vollständig offenen Stellung sein. Der Schalter 8 kann aber auch elektronisch mittels geeignet ansteuerbarer Halbleiterschalter gebaut sein. Diese Ansteuerung kann dann eine manuell oder automatisch ausführbare Tastung und entsprechende Signalformung aufweisen, mit der etwa "auf" entsprechend der einen Polarität mit dem ersten Eingangsanschluss 8-1 angeschaltet, "zu" entsprechend der anderen Polarität mit dem zweiten Eingangsanschluss 8-2 angeschaltet und "aus" entsprechend leistungslos mit keinem Eingangsanschluss angeschaltet eingestellt werden kann. Anders als die bisher beschriebenen nutzerbetätigbaren Schalter kann der Schalter 8 auch Teil einer automatischen Steuerung oder Fernbedienung sein und somit automatisch betätigbar sein. Der Schalter 8 kann gemäß dem KNX-Standard oder dem EIB-Standard gebaut und/oder schaltbar und/oder bedienbar und/oder fernbedienbar sein. Es ist auch möglich, einen automatisch betätigbaren Schalter (auch KNX, EIB) funktional parallel zu einem nutzerbetätigbaren Schalter vorzusehen.

Ein primärseitiger Vollwellengleichrichter 5 weist einen Brückengleichrichter 21 auf. Dieser weist drei Diodenbrücken 21 und wenigstens einen Glättungskondensator 24 auf. Die drei Diodenbrücken sind mit ihren Anodenenden 23-1 und ihren Kathodenenden 23-2 parallelgeschaltet und stehen mit ihren Mittenanschlüssen 22-1, 22-2 und 22-3 mit je einem der Eingangsanschlüsse 8-1, 8-2 und 8-3 in Verbindung. Eine Drossel 10 kann zwischen den Eingangsanschlüssen 8-1, 8-2 und 8-3 und den Diodenbrücken in der Weise liegen, dass zwischen je einem Eingangsanschluss 8-1, 8-2, 8-3 und je einem Mittenanschluss 22-1, 22-2, 22-3 je eine Spule 25-1, 25-2, 25-3 liegt. Die drei Spulen 25 sind elektromagnetisch miteinander gekoppelt und können um einen Spulenkern gewickelt sein.

Nicht gezeigt in den Fig. 1 und 2 sind zwei Filterkondensatoren 401-1, 401-2, die jeweils zwischen den dritten Eingangsanschluss 8-3 und je einem des ersten Eingangsanschlusses 8-1 und zweiten Eingangsanschlusses 8-2 geschaltet sein können.

Die Spulen 25 der Drossel 10 können jeweils eine Induktivität über 10 mH oder über 20 mH oder über 25 mH aufweisen. Sie kann unter 50 mH oder unter 40 mH oder unter 35 mH liegen. Die Kondensatoren 401 können jeweils eine Kapazität über jeweils 10 oder 20 oder 50 nF haben. Sie kann jeweils unter 500 oder 200 oder 100 nF liegen. Sie kann 68 odeer 100 nF sein. Die Abstimmung der Spulen 25 und der Kondensatoren 401 kann so sein, dass sie Resonanzfrequenzen deutlich oberhalb der Netzfrequenz haben und dass sie auf die Schaltfrequenz des nachfolgenden Schaltnetzteiles abgestimmt sind. Die Resonanzfrequenz kann jeweils größer als 500 Hz oder 1 kHz oder 2 kHz sein und kann jeweils kleiner als 10 kHz oder 5 kHz sein. Sie kann bei 3 kHz liegen, vorzugsweise ±20% oder ±10%.

Wenn der Schaltung Wechselleistung zugeführt wird, indem mittels Schalter 8 einer der Eingangsanschlüsse 8-1 bzw. 8-2 an den Versorgungsanschluss 2-1 angeschaltet ist, wird Leistung je nachdem, ob Eingangsanschluss 8-1 oder 8-2 angeschaltet ist, über die linke Diodenbrücke 21-1 und 21-4 oder über die mittlere Diodenbrücke 21-2 und 21-5, aber in jedem Fall über die rechte Diodenbrücke bestehend aus Dioden 21-3 und 21-6 geführt. Die so entstehende pulsierende Gleichspannung wird mittels des Kondensators 24 und gegebenenfalls weiterer Einrichtungen geglättet, so dass eine hinreichend konstante Gleichspannung G am Ausgang der parallelgeschalteten Diodenbrücken 21 entsteht.

Um zu erfassen, über welchen der anwählbaren Anschlüsse 8-1 bzw. 8-2 als Wahl für eine der Polaritäten der zu erzeugenden Gleichspannung Leistung zugeführt wird, weist wenigstens die Zuleitung zwischen erstem Eingangsanschluss 8-1 und erstem Mittenanschluss 22-1 einen Signalabgriff 27-1 auf. Aus Nutzersicht entspricht die Wahl einer der Anschlüsse 8-1 oder 8-2 der Wahl für "auf" bzw. "zu" im Falle von Jalousiensteuerungen. Wegen der separaten Diodenbrücke der zwei wählbaren Zuleitungen von den zwei Eingangsanschlüssen 8-1 und 8-2 her teilt sich das Potential auf der einen wählbaren Zuleitung nicht der anderen wählbaren Zuleitung mit, so dass über eine Potentialmessung erfasst werden kann, über welche der wählbaren Zuleitungen Leistung zugeführt wird. In der Fig. 1 ist der Signalabgriff 27-1 zwischen Eingangsanschluss 8-1 und Drossel 10 gezeigt. Er kann aber auch, wie in Fig. 2 gezeigt, zwischen Drossel 10 und Mittenanschluss 22-1 der Diodenbrücke liegen. Vorzugsweise weisen, wie in den Fig. 1 und 2 gezeigt, beide der wählbaren Zuleitungen je einen Signalabgriff 27-1 und 27-2 auf.

Die am Glättungskondensator 24 anliegende Gleichspannung wird über einen Zerhacker 9 in eine impulsartige Gleichspannung Z zerhackt. Der Zerhacker kann nach Art eines Pulsbreitenmodulators mit konstanter Impulsfrequenz, aber einstellbarer Pulsbreite betrieben werden. Die Impulsfrequenz kann deutlich höher liegen als die Netzfrequenz. Sie kann über 1 kHz oder über 2 kHz oder über 5 kHz oder über 10 kHz liegen. Die Gesamtauslegung kann so sein, dass bei einer Pulsbreite, die zwischen 40% und 60% der Periodendauer, vorzugsweise 50% der Schaltfrequenz liegt, am Ausgang des sekundärseitigen Gleichrichters die dem Betrag nach gewünschte Gleichspannung entsteht und dass dann durch Regelung der Impulsbreite tatsächlich der Gleichspannungswert eingeregelt werden kann. Allerdings sind auch andere Regelungsstrategien denkbar, etwa konstante Impulsbreite bei einstellbarer Schaltfrequenz. Bei geringeren Anforderungen an die Genauigkeit der sekundärseitigen Gleichspannung kann deren Wert auch nur durch Vorwärtssteuerung einstellbar sein.

Der Transformator 4 empfängt an seiner Primärseite 4-1 die zerhackte Gleichspannung und transformiert sie entsprechend dem Wicklungsverhältnis in eine Wechselspannung geringerer Amplitude um. Der Transformator 4 kann nach dem Sperrwandlerprinzip verschaltet sein. Das heißt, dass bei eingeschaltetem Transistor Energie von der Primärseite her in der Wicklung gespeichert wird, die in der Sperrphase auf der Sekundärseite abgegeben wird. Das Wicklungsverhältnis zwischen Primärseite 4-1 und 4-2 wird geeignet gewählt. Die Sekundärspule 4-2 speist die an ihren Anschlüssen anstehende Wechselspannung in einen sekundärseitigen Gleichrichter 6 ein. Der sekundärseitige Gleichrichter kann einen Brückengleichrichter aufweisen, insbesondere einen Vollwellengleichrichter oder kann einen Schaltgleichrichter aufweisen. Außerdem ist eine Glättung vorgesehen, bspw. mittels parallelgeschalteten Kondensatoren, so dass am Ausgang des Gleichrichters 6 eine hinreichend geglättete Gleichspannung an den Klemmen 6-1 und 6-2 anliegt.

Es kann ein Rückführungszweig 15 vorgesehen sein, der einen der Gleichspannung entsprechenden Wert als analogen Wert zurückführt, um so womöglich nach Vergleich mit einem Sollwert im Subtrahierer 16 eine Regeldifferenz zu erzeugen, die in einem Regler 18 in eine geeignete Pulsbreite zur Ansteuerung des Zerhackers 9 oder gegebenenfalls in eine Impulsfrequenz umgesetzt werden kann. Das Rückführungssignal R im Rückführungszweig 15 kann einen analogen Drahtloskoppler 14 durchlaufen, insbesondere einen Optokoppler. Es bleibt dann die galvanische Trennung der Primärseite von der Sekundärseite erhalten.

Die Ausgangsspannung des sekundärseitigen Gleichrichters 6 läuft in einen Umpoler 7, dessen Ausgang 3 zwei Ausgangsklemmen 3-1 und 3-2 aufweist. Der Umpoler ist dazu ausgelegt, die Gleichspannung, die er empfängt, in einer wählbaren der zwei möglichen Polaritäten, also Plus entweder an 3-1 oder 3-2 und Minus dementsprechend an die jeweils andere Klemme anzulegen. Dies kann durch ein Schaltnetzwerk von Schaltern erfolgen. Es kann sich dabei um elektronische Schalter handeln, die elektronisch an- und ausschaltbar sind, also zwischen niederohmig und hochohmig umschaltbar sind. Die Schalter können Feldeffekttransistoren oder Bipolartransistoren aufweisen. Das Blockschaltbild der Fig. 1 zeigt im Umpoler 7 schematisch Umschalter, z.B. antiparallele Freilaufdioden und ähnliches. Bei der Implementierung mittels Halbleiterschaltern werden aber in der Regel nicht zwei Umschalter verbaut, sondern vier einzelne An- und Aus-Schalter, die jeweils eine der gewünschten Verbindungen herstellen oder unterbrechen können. Die Halbleiterschalter schalten nach Maßgabe des Polaritätssignals, das den Schaltern in Amplitude und Zeitlage geeignet eingestellt zugeführt wird.

Das Polaritätssignal P wird nach Maßgabe des Signals mindestens vom ersten Signalabgriff 27-1 her erzeugt. In einer Ausführungsform kann lediglich ein Signalabgriff 27-1 vorgesehen sein. Die Polarität kann a priori auf einem voreingestellten Wert liegen, der auf die andere Polarität umgeschaltet wird, wenn vom ersten Signalabgriff 27-1 her ein bestimmtes Signal S1 eintrifft oder gegebenenfalls ausbleibt.

Vorzugsweise weisen aber beide anwählbaren Leitungen von 8-1 und 8-2 her je einen eigenen Signalabgriff 27-1, 27-2 auf, deren Signale S1, S2 gemeinsam der Erzeugung des Polaritätssignals P dienen. Nach geeigneter Signalformung, etwa Amplitudeneinstellung durch Spannungsteiler und/oder Gleichrichtung, kann beispielsweise einer der Signalabgriffe auf den Setzeingang und der andere auf den Rücksitzeingang eines Flipflops 12 einwirken, an dessen Ausgang 12-3 das Polaritätssignal dann stabil anliegt, bis es durch Signalisierung vom anderen Signalabgriff her umgeschaltet wird.

Die Leistungsleitungen vom ersten Eingangsanschluss 8-1 und vom zweiten Eingangsanschluss 8-2 her werden über getrennte Diodenbrücken 21-1, 21-4 und 21-2, 21-5 geführt. Die Potentiale in diesen Leitungen sind deshalb gegeneinander entkoppelt, so dass sie unabhängig voneinander erfasst werden können und so der Signalisierung wie beschrieben dienen können. Im Leistungsstrang der Gesamtschaltung ist die Wahl der Anschaltung der Leistung von 2-1 auf 8-1 oder 8-2 bedeutungslos. Die Wahl dient der Signalisierung über die Signalabgriff 27-1 und ggf. 27-2, um eine der beiden Polaritäten und mittelbar dadurch beispielsweise eine der beiden Laufrichtungen eines Elektromotors wählen zu können, ohne über die Schaltung der Wechselleistung hinaus weitere Schalter und Signalisierungen hin zum Motor zu benötigen.

Zur Aufrechterhaltung der galvanischen Trennung ist wenigstens ein Optokoppler bzw. Drahtloskoppler 13 im Pfad des Polaritätssignals P vorgesehen. Fig. 1 zeigt ihn nach dem Ausgang 12-3 des Flipflops 12. Der Ausgang des Drahtloskopplers 13 steht mit dem Steuereingang des Umpolers 7 in Verbindung und kann so die gewünschte Umschaltung bewirken. Das Polaritätssignal P ist vorzugsweise ein digitales Signal, das stabil zwei Werte entsprechend den zwei gewünschten Polaritäten einnehmen kann.

Vorzugsweise werden auch die beiden Signale S1 und S2 von den Signalabgriffen 27-1, 27-2 her über Drahtloskoppler/Optokoppler 11-1 und 11-2 geführt, die die weiter notwendigen Signalformungsschaltelemente, beispielsweise Spannungsteilung und/oder Gleichrichtung, aufweisen können. Wenn sie vorgesehen sind, kann der Drahtloskopplers 13 am Ausgang des Flipflops entfallen.

Das Ausschalten des Motors, wenn der angetriebene Mechanismus, beispielsweise ein Jalousieantrieb, einen Anschlag erreicht hat, kann regelungstechnisch erfolgen, indem am Anschlag Stromänderungen ausgewertet werden und dies regelungstechnisch dahingehend verarbeitet wird, dass eingangsseitig die zugeführte Leistung auf Null geregelt wird, bei Pulsbreitenmodulation also auf Pulsbreite Null entsprechend einem immer ausgeschalteten Schalter 9. Ausgeschaltet bedeutet hier Schalter auf hochohmig. Der Schalter 9 kann ein Leistungstransistor sein, insbesondere ein Feldeffekttransistor oder ein Bipolartransistor. Das Ausschalten kann auch mittels geeigneter Anschlagschalter geschehen oder es kann manuell erfolgen.

Die Drossel 10 weist die drei Spulen 25-1, 25-2 und 25-3 auf. Sie sind elektromagnetisch miteinander gekoppelt. Sie dienen der Herausfilterung der Rückwirkungen des Schaltens des Schaltnetzteils auf die Versorgungsleitungen jenseits der Spannungsversorgungsschaltung. Die drei Drosselspulen 25-1, 25-2 und 25-3 sind so ausgelegt, dass sie bei Schaltrauschen reaktive Spannungen erzeugen, die sich mindestens teilweise und vorzugsweise weitgehend kompensieren. Sie sind so ausgelegt, dass alle drei im Wesentlichen gleiche Impedanzen haben, ihre Impedanzen können um nicht mehr als 20% oder 10% oder 5% oder 2% des Wertes der größten Induktivität voneinander abweichen. Es werden dann entweder die zwei Spule 25-1 und 25-3 oder die zwei Spulen 25-2 und 25-3 gleichzeitig vom geschalteten Strom durchflossen. Die erzeugten reaktiven Spannungen im hochfrequenten Bereich können sich dann mindestens teilweise und vorzugsweise weitgehend gegenseitig auslöschen, so dass eine unerwünschte Rückwirkung auf die Versorgungsleitungen weitgehend unterdrückt wird und die Schaltung im Einklang mit EMV-Regularien wie Normen steht. Die Unterdrückung von Rückwirkungen kann weiter verbessert werden, wenn Kondensatoren zwischen der gemeinsamen Zuleitung und jeder der wählbaren Zuleitungen vorgesehen sind.

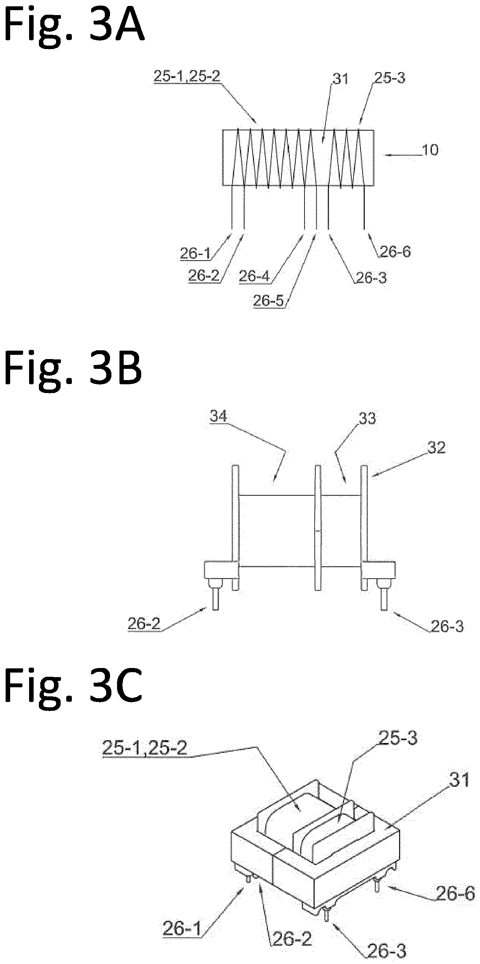

Die Fig. 3A, 3B und 3C zeigen Ausführungsformen der Drossel 10 mit den Drosselspulen 25-1, 25-2 und 25-3. Fig. 3A zeigt schematisch ein mögliches Wicklungsschema. 25-3 symbolisiert die Spule in der fest angeschalteten Zuleitung vom dritten Eingangsanschluss 8-3 her. Die beiden Spulen 25-1 und 25-2 in den zwei wählbaren Zuleitungen vom ersten Anschluss 8-1 und zweiten Eingangsanschluss 8-2 her können gemeinsam gewickelt sein. Alle Spulen können die gleiche Windungszahl aufweisen. Im Inneren der Spulen kann ein Spulenkern 31 geeigneten Materials liegen. Vorzugsweise liegen die dritte Spule 25-3 und die gemeinsam gewickelte erste Spule 25-1 und zweite Spule 25-2 axial nebeneinander auf dem Spulenkern. Sie können aber auch radial geschichtet liegen. Jede Spule weist eigene Anschlüsse auf und ist somit separat elektrisch einschaltbar. Die erste Spule 25-1 hat die Anschlüsse 26-1 und 26-4, die zweite Spule 25-2 die Anschlüsse 26-2 und 26-5. Die dritte Spule 25-3 hat die Anschlüsse 26-3 und 26-6.

Fig. 3B zeigt einen Spulenkörper, wie er zur Herstellung der Drossel 10 verwendet werden kann. Der Spulenkörper 32 kann eine kleinere Kammer 33 und eine größere Kammer 34 aufweisen. In die kleinere Kammer 33 kann die Spule 25-3 in der festen Zuleitung gewickelt werden. In die größere Kammer 34 können die gemeinsam gewickelten Spulen 25-1 und 25-2 gewickelt werden. Die Spule erfolgt mit geeigneten Drähten geeigneten Querschnitts. Die Wicklungszahl jeder der Spulen kann über 20 oder über 50 oder über 90 liegen. Sie kann unter 250 oder unter 150 liegen.

Fig. 3C zeigt eine perspektivische Darstellung einer möglichen Ausführungsform der Drossel 10. Gezeigt ist der Drosselkern 31, der das Spuleninnere einnimmt und auch den magnetischen Kreis außen um die Spulen herum schließen kann. Die Drossel kann nach unten ragende Anschlussbeine aufweisen, mittels derer sie in eine Platine eingesetzt und eingelötet werden kann. Die perspektivische Darstellung zeigt die zwei Anschlüsse 26-3 und 26-6 der dritten Spule 25-3. Von der ersten Spule 25-1 und der zweiten Spule 25-2 sind lediglich die jeweils einen Anschlussbeine 26-1 und 26-2 erkennbar. Die anderen Anschlüsse sind nicht erkennbar, aber vorhanden.

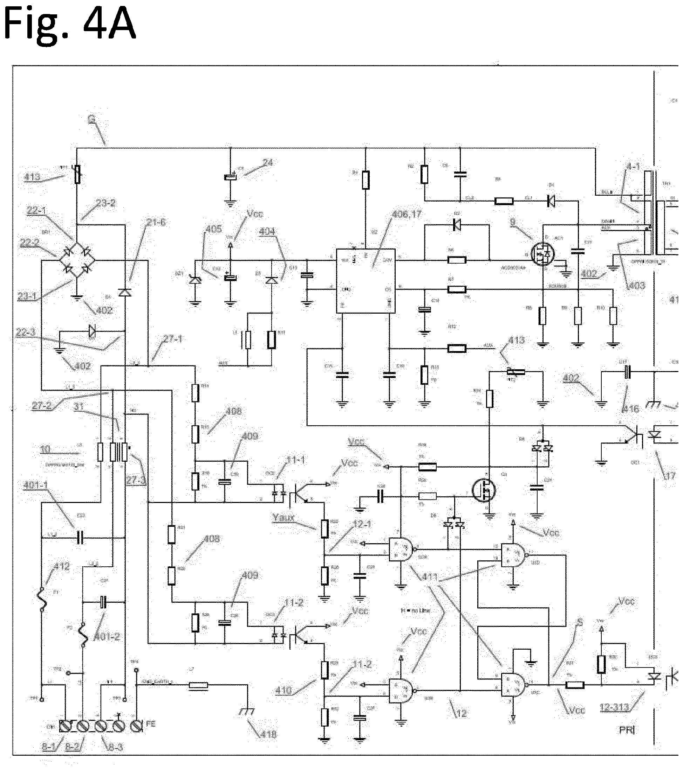

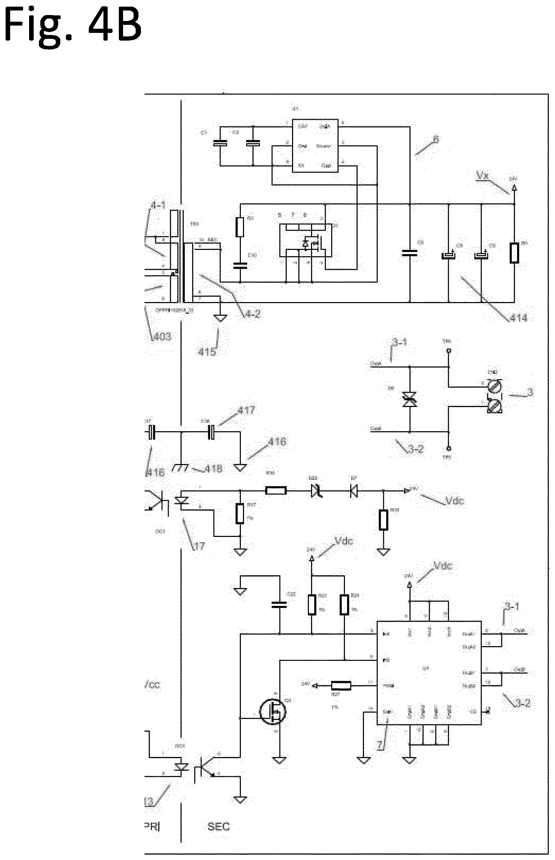

Fig. 4A zeigt ein vollständiges Schaltbild der Primärseite der Leistungsversorgungsschaltung. Es ist gemeinsam mit dem Schaltbild der Fig. 4B zu verstehen, das die Sekundärseite der Leistungsversorgungsschaltung zeigt.

Die Schaltbilder der Figuren 4A und 4B zeigen viele Schaltelemente in Kombination miteinander. Dies soll nicht bedeuten, dass Ausführungsformen zwingend diese Kombination so wie dargestellt aufweisen müssen. Teilaspekte können anders ausgelegt und anders gebaut oder weggelassen sein.

Die Primärseite der Schaltung weist eine eigene Gleichspannungsversorgung auf, die von einer Hilfsspule 403 des Trafos 4 her Wechselspannung zugeführt bekommt und diese mit Diode 404 halbwellengleichrichtet und mit Kondensator 405 glättet. Sie steht dann auf der Primärseite als Vcc zur Verfügung.

Der vorzugsweise integrierte Schaltkreis IC 406 bildet Teil der Steuerung bzw. Regelung 17 für den Schalter 9 des Zerhackers. Vom IC 406, 17 her erhält der Halbleiterschalter 9 Ansteuerimpulse der gewünschten Frequenz und Breite. Auf diese Weise erhält die Primärspule 4-1 eine getastete, pulsierende Gleichspannung, die jenseits des Gleichanteils am Transformator 4 als Wechselspannung erscheint. Der Schalter 9 kann ein Leistungstransistor sein, insbesondere ein Feldeffekttransistor oder ein Bipolartransistor. Der Schaltkreis 406 kann ein Standard-Schaltkreis sein, etwa eine Sperrwandler- oder LLC-Konfiguration.

Die Drahtloskoppler 11-1 und 11-2 sind hier gemeinsam vorgesehen, was aber, wie gesagt, nicht zwingend nötig ist. Sie weisen Spannungsteilerketten 408 für die Amplitudeneinstellung und eingangs parallele Kondensatoren 409 auf. Die Dimensionierung kann so sein, dass sie an ihrem Ausgang, ein Mittenanschluss der ausgangsseitigen Spannungsteiler 410, digital verwertbare Signale erzeugen.

Vorausgesetzt ist, dass die Zuführung der Wechselspannung im Betrieb der Schaltung lediglich über einen der Eingangsanschlüsse 8-1 bzw. 8-2 erfolgen kann. Es kann deshalb auch nur einer der Drahtloskoppler 11-1 und 11-2 ein entsprechendes Signal liefern.

In der gezeigten Ausführungsform ist mit mehreren Logikgattern 411 ein Flipflop aufgebaut, das einen Setzeingang und einen Rücksetzeingang aufweist. Der Setzeingang 11-1 steht mit dem Ausgang des einen Drahtloskopplers 11-1 in Verbindung, der Rücksitzeingang 11-2 mit dem Ausgang des anderen Drahtloskopplers 11-2. Das Flipflop kann als integrierter Schaltkreis ausgebildet sein. Die Verwendung eines Flip-Flops ermöglicht es, das fehlerhafte Umschalten der Polarität zu vermeiden, wenn die Netzspannung ausgeschaltet wird, wie dies beispielsweise der Fall ist, wenn ein an eine der beiden Phasen angeschlossenes Relais zum Schalten verwendet wird.

Der Ausgang des Gatters 411 unten rechts bildet den Ausgang 12-3 des Flipflops, der auf den dritten Drahtloskoppler 13 gegeben wird, so dass das Polaritätssignal P galvanisch entkoppelt an die Sekundärseite übergeben werden kann.

Die Primärseite weist eine Masseleitung 402 auf, die durch die Anodenenden der Diodenketten gebildet wird und an die die verschiedenen Komponenten je nach Notwendigkeit angeschlossen sein können. Zwischen Masseleitung 402 und den Kathodenenden der Diodenbrücken liegt der Schalter 9 des Zerhackers. In den eingehenden Leitungen können Sicherungen 412 vorgesehen sein. Sie können als Schmelzsicherungen ausgelegt sein, um einen Überstromschutz zu liefern. Weiter können als Überlastschutz Heißleiter 413 vorgesehen sein, die einen weiteren Überstromschutz bilden können. Auch die Hilfsspule 403 kann an die primärseitige Masseleitung 402 angeschlossen sein.

Fig. 4B zeigt die Schaltung auf der Sekundärseite. Die Sekundärspule 4-2 ist an den sekundärseitigen Gleichrichter 6 angeschlossen, der als Schaltgleichrichter ausgelegt ist. Er würde ohne Weiteres eine pulsierende Gleichspannung erzeugen. Mittels Glättungskondensatoren 414 wird diese auf einen hinreichend stabilen Gleichspannungswert geglättet. Der so entstandene Gleichspannungswert steht als Wert V_{DC} gegenüber der sekundärseitiger Masse 415 zur Verfügung.

Insbesondere wird die Gleichspannung V_{DC} dem Umpoler 7 zugeführt. Er erhält weiterhin vom Drahtloskoppler 13 her ein digitales Signal, um die an seinem Eingang in konstanter Polarität anliegende Gleichspannung V_{DC} in einer der zwei wählbaren möglichen Polarität an seine Ausgangsanschlüsse 3-1 und 3-2 anzulegen. Der Umpoler 7 kann als integrierter Schaltkreis gebaut sein, der integriert die benötigten Halbleiterschalter und weiteren Schaltungskomponenten enthält, insbesondere zur Formatierung und zeitlichen Steuerung der Schaltsignale der einzelnen Transistoren.

Die sekundärseitige Gleichspannung V_{DC} kann mittels eines korrelierten Signals über einen Rückführungszweig 15 zurückgeführt werden, insbesondere mit einem Drahtloskoppler 17, der das Signal drahtlos analog auf die Primärseite zurückführen kann, wo es verwendet werden kann, indem es dem IC 406 bzw. der Steuerung/Regelung 17 zugeführt wird. Auch der Regler 17 kann als integrierter Schaltkreis ausgebildet sein. Da eine Einstellbarkeit der zu erzeugenden Gleichspannung häufig nicht notwendig ist, kann eine explizite Sollwertvorgabe und die Differenzbildung mit einem ggf. einstellbaren Sollwert entfallen, wenn ansonsten der Regler 17 in seiner Kennlinie gegenüber dem rückgeführten Wert geeignet ausgelegt ist. Die Regelungskennlinie ist im integrierten Schaltkreis 406 implementiert. Er kann analog arbeiten oder kann eine kleine digitale Schaltung aufweisen.

Sekundärseitige Masse 415 und primärseitige Masse 402 können über seriell geschaltete sogenannte "Y-Kondensatoren" miteinander verbunden sein, wobei der Mittenpunkt der Y-Kondensatoren mit der Gebäudeerdung verbunden sein kann.

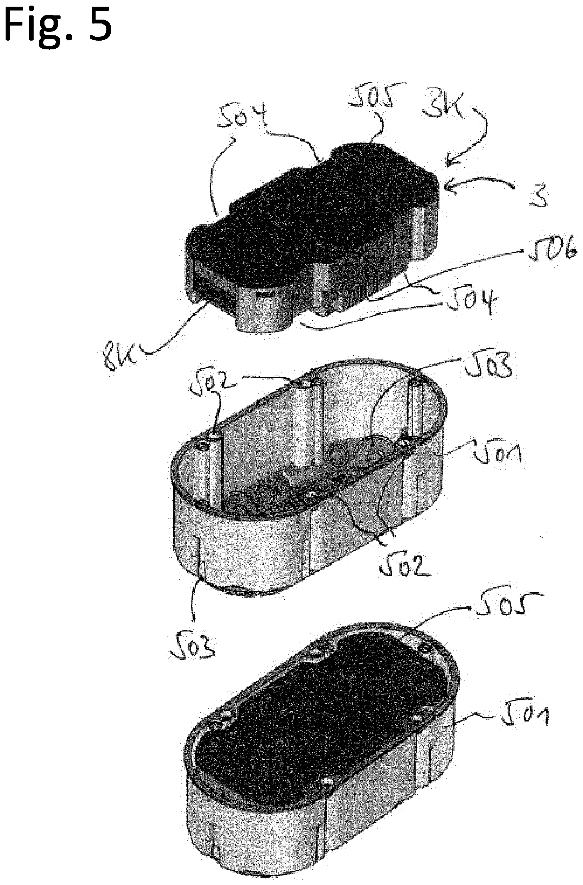

Fig. 5 zeigt Merkmale des mechanischen Aufbaus. 505 ist das Gehäuse der Leistungsversorgungsschaltung. Es kann die beschriebenen Komponenten aufnehmen. Es kann Lüftungsöffnungen oder -schlitze 506 aufweisen, z.B. an gegenüberliegenden Gehäuseseiten, so dass Luft zur Kühlung zirkulieren kann. Der eigentliche Schalter 8 zur Anwahl des ersten Eingangsanschlusses 8a oder des zweiten Eingangsanschlusses 8b zur Zuführung der Leistung kann jedoch separat vorgesehen sein und zusätzlich angebracht werden und wird dann mittels eigener Leitungen angeklemmt. Er ist in Figur 5 nicht gezeigt. 501 ist eine Doppel-Unterputzdose, die an einen Standard für einzelne Unterputzdosen angelehnt oder ihm folgend geformt ist, wie sie in Gebäudeinstallationen in Hauswände eingelassen sein kann. Eine Vorgabe hier kann bspw. die DIN-49073 sein oder entsprechende Normen anderer Länder. Figur 5 zeigt die Dose im noch nicht verbauten Zustand. 502 sind Befestigungsstrukturen zum Befestigen der Einbauten in der Dose. Das Gehäuse 505 ist in der in Figur 5 gezeigten Ausführungsform so geformt, dass es in eine einem Standard folgend geformte Doppel-Unterputzdose einfügbar ist und dort befestigt werden kann. Abhängig von der benötigten Leistung sind aber auch kleinere Bauformen möglich, die in eine einzige Unterputzdose passen können.

Das Gehäuse weist die für den Einbau in eine Dose notwendigen Maße und äußere Formgebung auf, bspw. auch Taillierungen 504. In der gezeigten Ausführungsform sind am linken Längsende die Klemmen 8K entsprechend den Eingangsanschlüssen 8-1, 8-2 und 8-3 und gegebenenfalls weiterer Anschlüsse, insbesondere Gehäuseerdung und/oder Schutzleiter, vorgesehen. Am anderen Ende und in der gezeigten Darstellung nicht sichtbar können die Klemmen 3K der Gleichspannungsanschlüsse 3, 3-1, 3-2 liegen. Die jeweiligen externen Leitungen können von Leerrohren in der Wand beispielsweise durch Öffnungen 503 in die Dose reichen und dann dort an die Klemmen 8K bzw. 3K angeschlossen werden. Fig. 5 unten zeigt die Leistungsversorgungsschaltung im Gehäuse 505 im verbauten Zustand in der Doppel-Unterputzdose 501. Der Schalter 8 kann dann andernorts z. B. in einer eigenen Unterputzdose oder aufputz liegen und mittels geeigneter, etwa in der Wand laufender Kabel angeschlossen sein. Wenn der Schalter 8 elektronisch gebaut ist, ist es aber auch möglich, ihn in die beschriebene Schaltung zu integrieren und das Bedienfeld dazu von außen zugänglich vorzusehen.

### Bezugszeichenliste

- 1: Leistungsversorgungsschaltung
- 2: Wechselspannungsquelle
- 2-1, 2-2: erster, zweiter Versorgungsanschluss
- 3: Gleichspannungsausgang
- 3-1, 3-2: erster, zweiter Gleichspannungsanschluss
- 4, 4-1, 4-2: Transformator, Primärspule, Sekundärspule
- 5: Vollwellengleichrichter
- 6: Gleichrichter
- 7: Umpoler
- 8: Schalter
- 8-1, 8-2, 8-3: erster, zweiter, dritter Eingangsanschluss
- 9: Zerhacker
- 10: Drossel
- 11: Drahtloswandler
- 12: Flipflop
- 13: Drahtloswandler
- 14: Drahtloswandler
- 15: Rückführung
- 16: Differenzbildung
- 17: Steuerung, Regelung
- 21: Brückengleichrichter
- 21-1- 21-6: Dioden
- 22-1, 22-2, 22-3: Mittenanschlüsse
- 23-1, 23-2: Anodenanschluss, Kathodenanschluss
- 24: Glättungskondensator
- 25-1, 25-2, 25-3: erste, zweite, dritte Spule
- 26-1-26-6: Spulenanschlüsse
- 27-1, 27-2: erster Signalabgriff, zweiter Signalabgriff
- 31: Spulenkern
- 32: Drosselkörper
- 33: erste Kammer
- 34: zweite Kammer
- 401-1,401-2: Kondensatoren
- 402: primärseitige Masse
- 403: Hilfsspule
- 404: Diode
- 405: Kondensator
- 406: Steuerer, Regler
- 408: Spannungsteiler
- 409: Kondensator
- 410: ausgangsseitiger Spannungsteiler
- 411: Logikgatter
- 412: Sicherung
- 413: Heißleiter
- 414: Glättungskondensator
- 415: sekundärseitige Masse
- 416,417: Y-Kondensatoren
- 418: Erdung
- 501: Unterputzdose
- 502: Befestigungseinrichtung
- 503: Kabeleinlässe
- 504: Taillierung
- 505: Gehäuse
- 506: Lüftungsschlitze

## Patentansprüche

1. Leistungsversorgungsschaltung mit
• einem Wechselspannungseingang, der aufweist
∘ einen ersten und einen zweiten Eingangsanschluss (8-1, 8-2), die alternativ wählbar an einen ersten Versorgungsanschluss (2-1) einer Wechselspannungsquelle (2) anschaltbar sind,
o einen dritten Eingangsanschluss (8-3), der an den zweiten Versorgungsanschluss (2-2) der Wechselspannungsversorgung (2) anschließbar ist,
• einem Schaltnetzteil (5) mit einem Vollwellengleichrichter (5, 21 - 24) für die von den Eingangsanschlüssen (8-1, 8-2, 8-3) eingehende Wechselspannung, einem Zerhacker (9), einem Transformator (4) mit einer Primärspule (4-1) und einer Sekundärspule (4-2) und einem an die Sekundärspule angeschlossenen Gleichrichter (6) mit zwei Gleichspannungsanschlüssen (6-1, 6-2), und
• einem an die Gleichspannungsanschlüsse (6-1, 6-2) angeschlossenen Umpoler (7) mit zwei Ausgangsanschlüssen (3-1, 3-2), der dazu ausgelegt ist, die von den Gleichspannungsanschlüssen (6-1, 6-2) empfangene Gleichspannung in nach Maßgabe eines Polaritätssignals (P) wählbarer Polarität an die Ausgangsanschlüsse (3-1, 3-2) anzulegen,
wobei der Vollwellengleichrichter (5, 21 - 24) drei parallelgeschaltete Diodenketten (21-1 bis 21-6) mit je zwei Endanschlüssen (23-1, 23-2) aufweist und mit je einem Mittenanschluss (22-1, 22-2, 22-3), deren erster (22-1) mit dem ersten Eingangsanschluss (8-1), deren zweiter (22-2) mit dem zweiten Eingangsanschluss (8-2) und deren dritter (22-3) mit dem dritten Eingangsanschluss (8-3) in Verbindung stehen,
wobei zwischen dem ersten Eingangsanschluss (8-1) und dem ersten Mittenanschluss (22-1) ein erster Signalabgriff (27-1) für ein erstes Signal (S1) vorgesehen ist, nach dessen Maßgabe das Polaritätssignal (P) erzeugt wird,
und wobei eine Drossel (10, 25, 26) mit drei elektromagnetisch gekoppelten Spulen (25-1, 25-2, 25-3) vorgesehen ist, deren erste (25-1) zwischen ersten Eingangsanschluss (8-1) und ersten Mittenanschluss (22-1), deren zweite (25-2) zwischen zweiten Eingangsanschluss (8-2) und zweiten Mittenanschluss (22-1) und deren dritte (25-3) zwischen dritten Eingangsanschluss (8-3) und dritten Mittenanschluss (22-3) geschaltet ist.

2. Leistungsversorgungsschaltung nach Anspruch 1, wobei die erste und die zweite Spule (25-1, 25-2) und vorzugsweise auch die dritte Spule (25-3) in ihrer Induktivität um nicht mehr als 20% oder 10% oder 5% oder 2% des Wertes der größten Induktivität voneinander abweichen.

3. Leistungsversorgungsschaltung nach Anspruch 1 oder 2, wobei die größte Induktivität einen Wert zwischen 20 mH und 40 mH hat.

4. Leistungsversorgungsschaltung nach Anspruch 1, 2 oder 3, mit einem ersten Kondensator (401-1) zwischen erstem Eingangsanschluss (8-1) und drittem Eingangsanschluss (8-3) und einem zweiten Kondensator (401-2) zwischen zweitem Eingangsanschluss (8-2) und drittem Eingangsanschluss (8-3).

5. Leistungsversorgungsschaltung nach einem der Ansprüche 1 bis 4, wobei die erste Spule (25-1) und die zweite Spule (25-2) vereint in einem ersten Bereich (34) gewickelt sind und die dritte Spule (25-3) in einem am ersten Bereich in axialer oder radialer Richtung anliegenden zweiten Bereich (33) gewickelt ist.

6. Leistungsversorgungsschaltung nach einem der vorherigen Ansprüche, mit einem zweiten Signalabgriff (27-2) zwischen dem zweiten Eingangsanschluss (8-2) und dem zweiten Mittenanschluss (22-2) für ein zweites Signal (S2), nach dessen Maßgabe das Polaritätssignal (P) erzeugt wird.

7. Leistungsversorgungsschaltung nach einem der vorherigen Ansprüche, bei der mindestens der erste Signalabgriff (27-1) einen ersten Drahtloskoppler (11-1), insbesondere einen ersten Optokoppler und vorzugsweise eingangsseitig und/oder ausgangsseitig Signalformungselemente aufweist.

8. Leistungsversorgungsschaltung nach einem der vorherigen Ansprüche, bei der mindestens der erste Signalabgriff (27-1) zwischen dem ersten Mittenanschluss (22-1) und der ersten Spule (25-1) oder zwischen der ersten Spule (25-1) und dem ersten Eingangsanschluss (8-1) angeschaltet ist.

9. Leistungsversorgungsschaltung nach einem der vorherigen Ansprüche, bei der der Umpoler (7) mehrere Halbleiterschalter aufweist, die nach Maßgabe des Polaritätssignals (P) an- und ausschaltbar sind.

10. Leistungsversorgungsschaltung nach einem der vorherigen Ansprüche, mit einem Flipflop (12), das nach Maßgabe des ersten und ggf. des zweiten Signals (S1, S2) steuerbar ist und an seinem Ausgang das Polaritätssignal (P) liefern kann.

11. Leistungsversorgungsschaltung nach Anspruch 10, bei der zwischen den Ausgang (12-3) des Flipflops (12) und den Umpoler (7) ein dritter Drahtloskoppler (13), insbesondere ein dritter Optokoppler geschaltet ist.

12. Leistungsversorgungsschaltung nach einem der vorherigen Ansprüche, mit einem Rückführungszweig (15) zum Zurückführen eines nach Maßgabe der Ausgangsgröße des Gleichrichters erzeugten Rückkopplungssignals (R) vom Ausgang des Gleichrichters (6) zum Zerhacker (9), wobei der Rückführungszweig einen vierten Drahtloskoppler (14), insbesondere einen vierten Optokoppler aufweisen kann, und wobei ein Regler (17, 406) zur Ansteuerung des Zerhackers (9) vorzugsweise nach Maßgabe des Rückkopplungssignals (R) vorgesehen sein kann.

13. Leistungsversorgungsschaltung nach einem der vorherigen Ansprüche, bei der der Umpoler (7) für die Einnahme mindestens zweier Schaltzustände entsprechend den zwei Polaritäten ausgelegt ist und für die Einnahme eines dritten Schaltzustands ausgelegt sein kann, bei dem seinem Ausgang (3) keine Spannung vom Gleichrichter (6) her zugeführt wird.

14. Leistungsversorgungsschaltung nach einem der vorherigen Ansprüche, mit einem Gehäuse (505), das für den Verbau in einer oder in zwei benachbarten standardisierten Unterputzdosen geformt ist.

15. Leistungsversorgungsschaltung nach einem der vorherigen Ansprüche, mit einem Schalter (8), mit dem wahlweise der erste Eingangsanschluss (8-1) oder der zweite Eingangsanschluss (8-2) oder keiner von beiden mit dem ersten Versorgungsanschluss (2-1) verbindbar ist.

## Claims

1. A power supply circuit comprising
• an AC voltage input which has
o a first and a second input terminal (8-1, 8-2) which are alternatively selectably connectable to a first supply terminal (2-1) of an AC voltage source (2),
o a third input terminal (8-3) which is connectable to the second supply terminal (2-2) of the AC voltage supply (2),
• a power supply unit (5) having a full-wave rectifier (5, 21 - 24) for the AC voltage entering from the input terminals (8-1, 8-2, 8-3), a chopper (9), a transformer (4) having a primary coil (4-1) and a secondary coil (4-2), and a rectifier (6) which is connected to the secondary coil and which has two DC voltage terminals (6-1, 6-2), and
• a pole changer (7) which is connected to the DC voltage terminals (6-1, 6-2), which has two output terminals (3-1, 3-2) and which is adapted to apply the DC voltage received from the DC voltage terminals (6-1, 6-2) to the output terminals (3-1, 3-2) in a polarity selectable in accordance with a polarity signal (P),
wherein the full-wave rectifier (5, 21 - 24) has three diode chains (21-1 to 21-6) connected in parallel which each have two end terminals (23-1, 23-2) and each have a center terminal (22-1, 22-2, 22-3), the first (22-1) of which is connected to the first input terminal (8-1), the second (22-2) of which is connected to the second input terminal (8-2) and the third (22-3) of which is connected to the third input terminal (8-3),
wherein a first signal tapping (27-1) for a first signal (S1), in accordance with which the polarity signal (P) is generated, is provided between the first input terminal (8-1) and the first center terminal (22-1),
and wherein a choke (10, 25, 26) is provided which has three electromagnetically coupled coils (25-1, 25-2, 25-3), the first (25-1) of which is connected between the first input terminal (8-1) and the first center terminal (22-1), the second (25-2) of which is connected between the second input terminal (8-2) and the second center terminal (22-1), and the third (25-3) of which is connected between the third input terminal (8-3) and the third center terminal (22-3).

2. A power supply circuit in accordance with claim 1, wherein the first and second coils (25-1, 25-2) and preferably also the third coil (25-3) differ in their inductance by no more than 20% or 10% or 5% or 2% of the value of the largest inductance.

3. A power supply circuit in accordance with claim 1 or claim 2, wherein the largest inductance has a value between 20 mH and 40 mH.

4. A power supply circuit in accordance with claim 1, claim 2 or claim 3, comprising a first capacitor (401-1) between a first input terminal (8-1) and a third input terminal (8-3) and a second capacitor (401-2) between a second input terminal (8-2) and a third input terminal (8-3).

5. A power supply circuit in accordance with any one of the claims 1 to 4, wherein the first coil (25-1) and the second coil (25-2) are unitedly wound in a first region (34) and the third coil (25-3) is wound in a second region (33) contacting the first region in the axial or radial direction.

6. A power supply circuit in accordance with any one of the preceding claims, comprising a second signal tapping (27-2) between the second input terminal (8-2) and the second center terminal (22-2) for a second signal (S2) in accordance with which the polarity signal (P) is generated.

7. A power supply circuit in accordance with any one of the preceding claims, in which at least the first signal tapping (27-1) has a first wireless coupler (11-1), in particular a first optocoupler, and preferably has signal-shaping elements at the input side and/or at the output side.

8. A power supply circuit in accordance with any one of the preceding claims, in which at least the first signal tapping (27-1) is connected between the first center terminal (22-1) and the first coil (25-1) or between the first coil (25-1) and the first input terminal (8-1).

9. A power supply circuit in accordance with any one of the preceding claims, in which the pole changer (7) has a plurality of semiconductor switches which can be switched on and off in accordance with the polarity signal (P).

10. A power supply circuit in accordance with any one of the preceding claims, comprising a flip-flop (12) which can be controlled in accordance with the first and possibly the second signal (S1, S2) and which can provide the polarity signal (P) at its output.

11. A power supply circuit in accordance with claim 10, in which a third wireless coupler (13), in particular a third optocoupler, is connected between the output (12-3) of the flip-flop (12) and the pole changer (7).

12. A power supply circuit in accordance with any one of the preceding claims, comprising a return branch (15) for returning a feedback signal (R), generated in accordance with the output variable of the rectifier, from the output of the rectifier (6) to the chopper (9), wherein the return branch can have a fourth wireless coupler (14), in particular a fourth optocoupler, and wherein a regulator (17, 406) can be provided to control the chopper (9) preferably in accordance with the feedback signal (R).

13. A power supply circuit in accordance with any one of the preceding claims, in which the pole changer (7) is adapted for adopting at least two switching states in accordance with the two polarities and can be adapted for adopting a third switching state in which no voltage is fed at the output (3) of said pole changer (7) from the rectifier (6).

14. A power supply circuit in accordance with any one of the preceding claims, comprising a housing (505) which is shaped for the installation into one or into two adjacent standardized flush-mounted sockets.

15. A power supply circuit in accordance with any one of the preceding claims, comprising a switch (8) by which selectively the first input terminal (8-1) or the second input terminal (8-2) or neither of them can be connected to the first supply terminal (2-1).

## Revendications

1. Circuit d'alimentation en puissance, comportant
- une entrée de tension alternative qui comprend
∘ une première et une deuxième borne d'entrée (8-1, 8-2) qui peuvent être connectées alternativement et sélectivement à une première borne d'alimentation (2-1) d'une source de tension alternative (2),
∘ une troisième borne d'entrée (8-3) qui peut être raccordée à la deuxième borne d'alimentation (2-2) de l'alimentation en tension alternative (2),
- un bloc d'alimentation à découpage (5) comprenant un redresseur pleine onde (5, 21 - 24) pour la tension alternative entrant par les bornes d'entrée (8-1, 8-2, 8-3), un hacheur (9), un transformateur (4) ayant une bobine primaire (4-1) et une bobine secondaire (4-2), et un redresseur (6) raccordé à la bobine secondaire et ayant deux bornes de tension continue (6-1, 6-2), et
- un inverseur de polarité (7) raccordé aux bornes de tension continue (6-1, 6-2) et ayant deux bornes de sortie (3-1, 3-2), qui est conçu pour appliquer la tension continue, reçue par les bornes de tension continue (6-1, 6-2), aux bornes de sortie (3-1, 3-2) selon une polarité pouvant être sélectionnée en fonction d'un signal de polarité (P),
dans lequel
le redresseur pleine onde (5, 21 - 24) comporte trois chaînes de diodes (21-1 à 21-6) montées en parallèle, ayant chacune deux bornes d'extrémité (23-1, 23-2) et ayant chacune une borne centrale (22-1, 22-2, 22-3), dont la première (22-1) est reliée à la première borne d'entrée (8-1), la deuxième (22-2) est reliée à la deuxième borne d'entrée (8-2) et la troisième (22-3) est reliée à la troisième borne d'entrée (8-3),
il est prévu, entre la première borne d'entrée (8-1) et la première borne centrale (22-1), une première prise de signal (27-1) pour un premier signal (S1) en fonction duquel le signal de polarité (P) est généré, et
il est prévu un self de choc (10, 25, 26) ayant trois bobines couplées électromagnétiquement (25-1, 25-2, 25-3), dont la première (25-1) est connectée entre la première borne d'entrée (8-1) et la première borne centrale (22-1), la deuxième (25-2) est connectée entre la deuxième borne d'entrée (8-2) et la deuxième borne centrale (22-1) et la troisième (25-3) est connectée entre la troisième borne d'entrée (8-3) et la troisième borne centrale (22-3).

2. Circuit d'alimentation en puissance selon la revendication 1,
dans lequel la première et la deuxième bobine (25-1, 25-2) et de préférence également la troisième bobine (25-3) ne diffèrent pas l'une de l'autre en termes d'inductance de plus de 20% ou 10% ou 5% ou 2% de la valeur de la plus grande inductance.

3. Circuit d'alimentation en puissance selon la revendication 1 ou 2,
dans lequel la plus grande inductance a une valeur comprise entre 20 mH et 40 mH.

4. Circuit d'alimentation en puissance selon la revendication 1, 2 ou 3, comprenant un premier condensateur (401-1) entre la première borne d'entrée (8-1) et la troisième borne d'entrée (8-3) et un deuxième condensateur (401-2) entre la deuxième borne d'entrée (8-2) et la troisième borne d'entrée (8-3).

5. Circuit d'alimentation en puissance selon l'une des revendications 1 à 4, dans lequel la première bobine (25-1) et la deuxième bobine (25-2) sont enroulées ensemble dans une première zone (34), et la troisième bobine (25-3) est enroulée dans une deuxième zone (33) adjacente à la première zone dans la direction axiale ou radiale.

6. Circuit d'alimentation en puissance selon l'une des revendications précédentes,
comprenant une deuxième prise de signal (27-2) entre la deuxième borne d'entrée (8-2) et la deuxième borne centrale (22-2) pour un deuxième signal (S2) en fonction duquel le signal de polarité (P) est généré.

7. Circuit d'alimentation en puissance selon l'une des revendications précédentes,
dans lequel au moins la première prise de signal (27-1) comprend un premier coupleur sans fil (11-1), en particulier un premier optocoupleur, et de préférence côté entrée et/ou côté sortie des éléments de mise en forme de signal.

8. Circuit d'alimentation en puissance selon l'une des revendications précédentes,
dans lequel au moins la première prise de signal (27-1) est connectée entre la première borne centrale (22-1) et la première bobine (25-1) ou entre la première bobine (25-1) et la première borne d'entrée (8-1).

9. Circuit d'alimentation en puissance selon l'une des revendications précédentes,
dans lequel l'inverseur de polarité (7) comprend plusieurs commutateurs à semi-conducteurs qui peuvent être activés et désactivés en fonction du signal de polarité (P).

10. Circuit d'alimentation en puissance selon l'une des revendications précédentes,
comprenant une bascule (12) qui peut être commandée en fonction du premier et éventuellement du deuxième signal (S1, S2) et qui est apte à fournir en sortie le signal de polarité (P).

11. Circuit d'alimentation en puissance selon la revendication 10,
dans lequel un troisième coupleur sans fil (13), en particulier un troisième optocoupleur, est connecté entre la sortie (12-3) de la bascule (12) et l'inverseur de polarité (7).

12. Circuit d'alimentation en puissance selon l'une des revendications précédentes,
comprenant une branche de retour (15) pour retourner un signal de rétroaction (R), généré en fonction de la grandeur de sortie du redresseur, depuis la sortie du redresseur (6) jusqu'au hacheur (9), la branche de retour pouvant comprendre un quatrième coupleur sans fil (14), en particulier un quatrième optocoupleur, et
il peut être prévu un régulateur (17, 406) pour commander le hacheur (9), de préférence en fonction du signal de rétroaction (R).

13. Circuit d'alimentation en puissance selon l'une des revendications précédentes,
dans lequel l'inverseur de polarité (7) est conçu pour prendre au moins deux états de commutation correspondant aux deux polarités et peut être conçu pour prendre un troisième état de commutation dans lequel sa sortie (3) n'est pas alimentée en tension provenant du redresseur (6).

14. Circuit d'alimentation en puissance selon l'une des revendications précédentes,
comprenant un boîtier (505) formé pour être monté dans une ou dans deux boîtes d'encastrement standard voisines.

15. Circuit d'alimentation en puissance selon l'une des revendications précédentes,
comprenant un commutateur (8) permettant de relier au choix la première borne d'entrée (8-1) ou la deuxième borne d'entrée (8-2), ou aucune des deux, à la première borne d'alimentation (2-1).
